# EUROPEAN PATENT APPLICATION

(11) **EP 4 741 678 A1**
(43) Date of publication of application: **13.05.2026**
(21) Application number: 24838512.2
(22) Date of filing: 13.06.2024
(51) Int. Cl.: F16F 9/14

(54) **DAMPING DEVICE AND VALVE COMPRISING SAME**

(30) Priority: 07.07.2023 CN 202310837791
(71) Applicant: York Guangzhou Air Conditioning and Refrigeration Co., Ltd., Qingyuan, Guangdong 511685 (CN); Tyco Fire & Security GmbH, 8212 Neuhausen am Rheinfall (CH)
(72) Inventor: DING, Xiaofeng, Qingyuan, Guangdong 511685 (CN); LIN, Kun, Qingyuan, Guangdong 511685 (CN); XU, Yujun, Qingyuan, Guangdong 511685 (CN); WEI, Donghong, Qingyuan, Guangdong 511685 (CN)
(74) Representative: Meissner Bolte Nürnberg
(86) International application number: PCT/CN2024/098917
(87) International publication number: WO 2025/011254

(57) **Abstract**

A damping device (110), wherein a housing (111) defines a chamber (240) filled with a damping liquid, and partition portions (213) on an inner wall (211) of the housing (111) define extreme positions (201); a damping control core (112) in the chamber (240) can rotate relative to the housing (111), and wing portions (232) of the damping control core (112) are provided with limiting surfaces (233) capable of being stopped by the partition portions (213); the chamber (240) comprises proximal accommodating cavities (241) and distal accommodating cavities (242) formed by partitioning by the partition portions (213) or the wing portions (232), and the volumes of each proximal accommodating cavity (241) and the corresponding distal accommodating cavity (213) change oppositely along with the movement of the damping control core (112) relative to the housing (111); inner connection channels (250) are formed in the wing portions (232) or the partition portions (213), and outer connection channels (270) are formed between the wing portions (232) and the inner wall (211) or between the partition portions (213) and the damping control core (112); and the inner and outer connection channels can be controllably connected to the proximal accommodating cavities (241) and the distal accommodating cavities (242); when the limiting surfaces (233) are not between a control position and the extreme positions (201) or when the limiting surfaces (233) move away from the extreme positions (201) between the control position and the extreme positions (201), the damping device (110) provides small damping; and when the limiting surfaces (233) move towards the extreme positions (201) between the control position and the extreme positions (201), the damping device (110) provides large damping.

## Description

### Technical Field

Embodiments of the present disclosure generally relate to a damping device and a valve comprising same.

### Background Art

A check valve is usually required to have a relatively small flow resistance to ensure sensitive opening and closing responses. However, in many applications, the flow rate or pressure of a medium is not stable. Sometimes, the flow rate or pressure of the medium is very small, and a valve disc of the check valve cannot maintain a stable small opening and will frequently collide with a valve seat sealing surface. Sometimes, the flow rate or pressure of the medium is very large, and the valve disc will frequently collide with the maximum opening limit of the check valve. Under such circumstances, the check valve will emit extremely disturbing noises, and even loud sounds, and cause damage to the valve seat sealing surface and the maximum opening limit, thereby shortening the service life of the check valve.

### Summary of the Invention

According to a first aspect of the present disclosure, the present disclosure provides a damping device, comprising a housing and a damping control core. The housing defines a chamber that is generally cylindrical, the chamber is filled with a damping liquid, and the housing comprises partition portions that project out of an inner wall of the housing to define extreme positions. The damping control core is disposed in the chamber and can rotate relative to the housing, the damping control core is provided with wing portions, and the wing portions are provided with limiting surfaces that face the extreme positions and that are capable of being stopped by the partition portions, wherein when a distance between the limiting surfaces and the extreme positions is a control distance, the limiting surfaces reach a control position. Wherein the chamber comprises proximal accommodating cavities close to the extreme positions and distal accommodating cavities away from the extreme positions, the proximal accommodating cavities and the distal accommodating cavities are formed by partitioning by the partition portions or the wing portions, and the volumes of each proximal accommodating cavity and the corresponding distal accommodating cavity change oppositely along with the movement of the damping control core relative to the housing. Wherein inner connection channels are formed in the wing portions, and outer connection channels are formed between the wing portions and the inner wall, or the inner connection channels are formed in the partition portions, and the outer connection channels are formed between the partition portions and the damping control core. Wherein the inner connection channels and the outer connection channels can be controllably connected to the proximal accommodating cavities and the distal accommodating cavities. Wherein the damping device is configured such that: when the limiting surfaces are not between the control position and the extreme positions, communication areas of the outer connection channels are increased so that the damping device provides small damping; when the limiting surfaces move towards the extreme positions between the control position and the extreme positions, communication areas of the outer connection channels and of the inner connection channels are decreased so that the damping device provides large damping; and when the limiting surfaces move away from the extreme positions between the control position and the extreme positions, communication areas of the outer connection channels are decreased and communication areas of the inner connection channels are increased so that the damping device provides small damping.

The damping device according to the above first aspect further comprises flow-limiting bosses. The flow-limiting bosses project out of the inner wall of the housing and extend along a circumferential direction; the flow-limiting bosses extend from the partition portions towards the wing portions by the control distance, or the flow-limiting bosses comprise proximal surfaces close to the extreme positions and distal surfaces away from the extreme positions, wherein a distance from the proximal surfaces to the extreme positions is not greater than a circumferential length of a radially outer side surface of the wing portions, and a distance from the distal surfaces to the extreme positions is the control distance. Wherein communication areas of the outer connection channels can be decreased by the flow-limiting bosses.

In the damping device according to the above first aspect, the damping control core comprises a mandrel and two wing portions extending from the mandrel to a radially outer side, two opposing sides of the partition portions define the two extreme positions respectively, and the housing is provided with the two flow-limiting bosses adjacent to the two extreme positions respectively.

The damping device according to the above first aspect further comprises flow-limiting bumps. The flow-limiting bumps project out of an outer surface of the damping control core and extend along a circumferential direction; the flow-limiting bumps extend from the wing portions towards the partition portions by the control distance, or the flow-limiting bumps comprise proximal surfaces close to the wing portions and distal surfaces away from the wing portions, wherein a distance from the proximal surfaces to the limiting surfaces is not greater than a circumferential length of a radially inner side surface of the partition portions, and a distance from the distal surfaces to the limiting surfaces is the control distance. Wherein communication areas of the outer connection channels can be decreased by the flow-limiting bumps.

In the damping device according to the above first aspect, the damping control core comprises a mandrel and at least one wing portion extending from the mandrel to a radially outer side; two opposing sides of one wing portion of the at least one wing portion provide the two limiting surfaces respectively; the damping control core is provided with the two flow-limiting bumps adjacent to the two limiting surfaces respectively; the housing comprises the two partition portions; and the two partition portions define the two extreme positions respectively.

The damping device according to the above first aspect further comprises channel control cores, wherein the channel control cores are movably disposed in the inner connection channels. Wherein shapes of the inner connection channels are configured such that communication areas of the inner connection channels can be increased or decreased by adjusting positions of the channel control cores in the inner connection channels.

In the damping device according to the above first aspect, the inner connection channels comprise proximal channels, middle channels, and distal channels connected sequentially, the proximal channels are adjacent to the proximal accommodating cavities and are in fluid connection with the proximal accommodating cavities, the distal channels are adjacent to the distal accommodating cavities and are in fluid connection with the distal accommodating cavities, and the channel control cores are movably disposed in the middle channels.

In the damping device according to the above first aspect, the middle channels and the channel control cores extend generally along an axial direction, and the proximal channels and the distal channels extend generally along a circumferential direction or extend generally along a direction at an acute angle to the circumferential direction. Wherein when the channel control core moves to an end of the middle channel close to the proximal channel, the communication area of the inner connection channel is S₁; and when the channel control core moves to an end of the middle channel close to the distal channel, the communication area of the inner connection channel is S₂, wherein S₁ is greater than S₂.

In the damping device according to the above first aspect, the channel control cores are cylindrical over at least a portion of the length, radial sections of the middle channels are oblong holes, and the oblong holes extend generally along the circumferential direction.

In the damping device according to the above first aspect, the inner connection channels comprise a plurality of proximal channels, and the plurality of proximal channels are arranged at intervals generally along the axial direction; and/or the inner connection channels comprise a plurality of distal channels, and the plurality of distal channels are arranged at intervals generally along the axial direction.

In the damping device according to the above first aspect, decreasing communication areas of the outer connection channels comprises closing the outer connection channels, and decreasing communication areas of the inner connection channels comprises closing the inner connection channels.

According to a second aspect of the present disclosure, the present disclosure provides a valve, comprising a valve body, a valve core and the damping device according to the above first aspect. One of the valve body and the valve core is fixedly connected to the housing of the damping device, and the other one of the valve body and the valve core is fixedly connected to the damping control core of the damping device.

### Brief Description of the Drawings

FIG. 1 is an axial sectional view of a valve according to an embodiment of the present disclosure;
FIG. 2A is a stereoscopic view of a damping device according to an embodiment of the present disclosure;
FIG. 2B is a radial sectional view of the damping device shown in FIG. 2A in a first state;
FIG. 2C is a radial sectional view of the damping device shown in FIG. 2A in a second state;
FIG. 2D is a radial sectional view of the damping device shown in FIG. 2A in a third state;
FIG. 2E is a stereoscopic view of the damping device shown in FIG. 2A with an end cover on one side removed;
FIG. 3A is a radial sectional view of a damping device in a first state according to another embodiment of the present disclosure;
FIG. 3B is a radial sectional view of the damping device shown in FIG. 3A in a second state;
FIG. 3C is a radial sectional view of the damping device shown in FIG. 3A in a third state.

It should be understood that the drawings are not necessarily drawn to scale. In some cases, details that are not necessary for understanding the present invention or details that render other details difficult to be detected may be omitted. In appropriate cases, similar or identical reference signs are used to indicate similar or identical components.

### Detailed Description of Embodiments

Various specific embodiments of the present disclosure will be described below with reference to the drawings that constitute a part of the specification. It should be understood that although terms, such as "front", "rear", "upper", "lower", "left", "right", "top", "bottom", etc. that represent directions are used in the present disclosure to describe various exemplary structural parts and elements of the present disclosure, these terms used herein are determined on the basis of exemplary orientations shown in the drawings for the purpose of facilitating illustration only. Since the embodiments disclosed in the present disclosure may be set in different directions, these terms that represent the directions are for illustration only and should not be regarded as limitations.

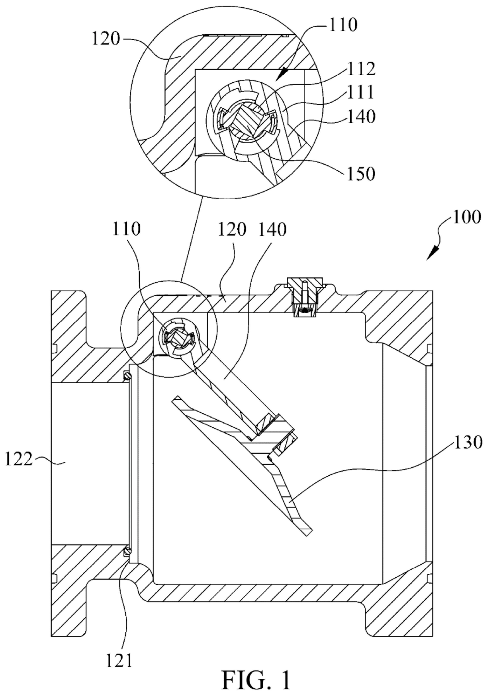

FIG. 1 is an axial sectional view of a valve 100 according to an embodiment of the present disclosure. The valve 100 is a check valve, comprising a valve body 120, a valve core 130, and a damping device 110.

The valve core 130 is rotatably connected to the valve body 120. For example, the valve 100 further comprises an arm 140. The valve core 130 is fixedly connected to one end of the arm 140, and the other end of the arm 140 is rotatably connected to the valve body 120. When the valve 100 is not in operation, the valve core 130 is in close contact with a valve seat sealing surface 121 of the valve body 120 under the action of gravity or an elastic force of a spring not shown, and the valve 100 is in a closed state. When a medium flows into a fluid channel 122 in the valve 100 from left to right (according to an orientation shown in FIG. 1), and the pressure of the medium on the valve core 130 is greater than an opening pressure of the valve core 130, the valve core 130 rotates away from the valve seat sealing surface 121, to open the valve 100. However, when the flow of the medium suddenly stops or reverses, the valve core 130 immediately rotates back to the valve seat sealing surface 121 and closes the valve 100 to prevent the reverse flow of the medium from causing damage to the devices on a pipeline.

The damping device 110 is used for providing damping for the rotational movement of the valve core 130 relative to the valve body 120. The damping device 110 comprises a housing 111 and a damping control core 112 which will be described in detail below.

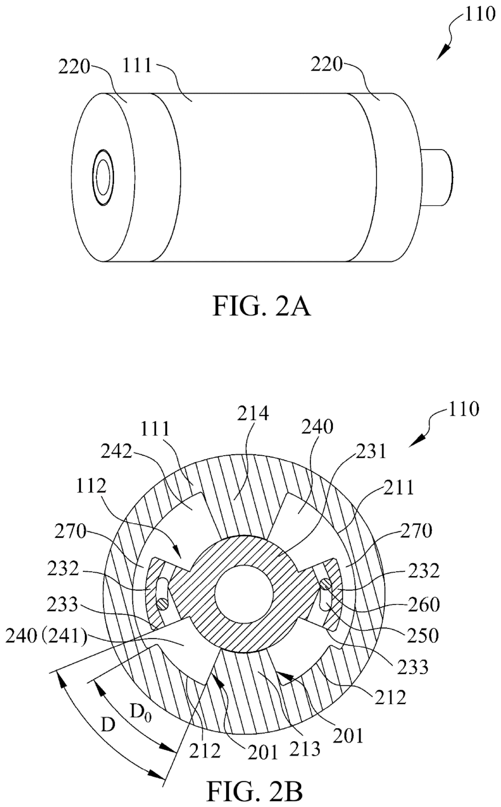

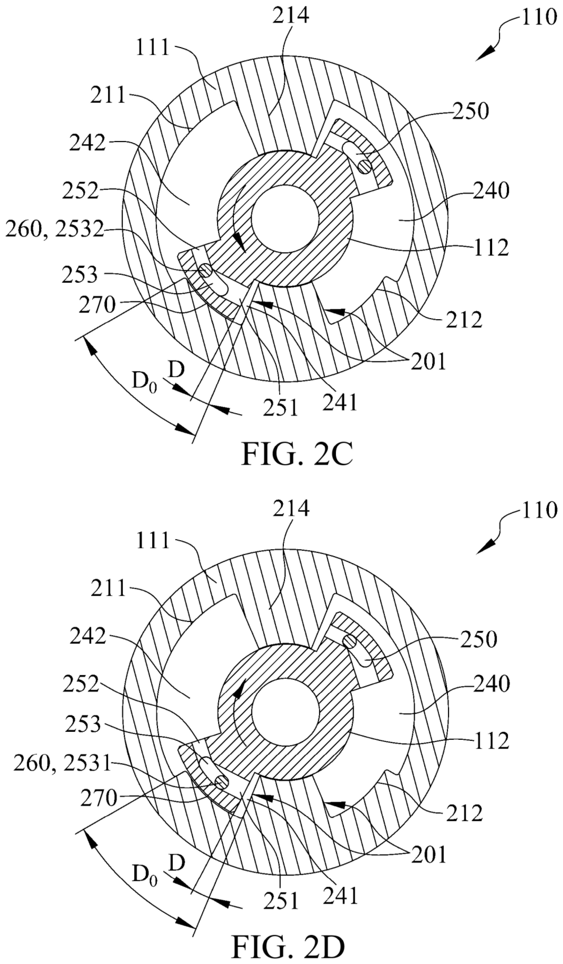

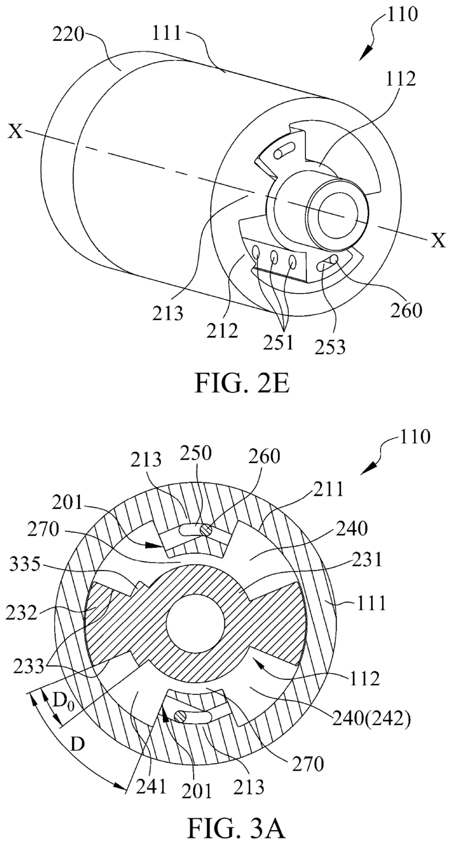

FIGs. 2A-2E show a specific structure of the damping device 110 according to an embodiment of the present disclosure, wherein FIG. 2A is a stereoscopic view of the damping device 110, FIG. 2B is a radial sectional view of the damping device 110 in a first state, FIG. 2C is a radial sectional view of the damping device 110 in a second state, FIG. 2D is a radial sectional view of the damping device 110 in a third state, and FIG. 2E is a stereoscopic view of the damping device 110 with an end cover 220 on one side removed.

The damping device 110 comprises a housing 111, end covers 220, and a damping control core 112. The housing 111 defines a chamber 240 that is generally cylindrical, and two end covers 220 are connected to both ends of the housing 111 in a length direction respectively to close the chamber 240. The chamber 240 is filled with a damping liquid, such as silicone oil or other viscous fluids. In order to prevent the damping liquid in the chamber 240 from leaking to the outside, a sealing element (not shown) is disposed at a specified location in the damping device 110.

The damping control core 112 is disposed in the chamber 240 and can rotate relative to the housing 111. The damping device 110 is used for providing damping for two relatively rotating components. One of the two relatively rotating components is fixedly connected to the housing 111, and the other one is fixedly connected to the damping control core 112.

The housing 111 comprises partition portions 213, and the partition portions 213 project out of an inner wall 211 of the housing 111 to a radially inner side. Two circumferentially opposing sides of the partition portions 213 define two extreme positions 201 respectively. The damping control core 112 comprises a generally cylindrical mandrel 231 and two wing portions 232 extending from the mandrel 231 to a radially outer side, and one circumferential side of each wing portion 232 is provided with a limiting surface 233 facing the corresponding extreme position 201. The radially outer side surfaces of the wing portions 232 are arc surfaces that take an axis X of the mandrel 231 as a center line.

When the damping control core 112 rotates towards one direction relative to the housing 111 until the limiting surface 233 of one wing portion 232 reaches the corresponding extreme position 201, the limiting surface 233 is stopped by one side of the partition portion 213 to prevent the damping control core 112 from continuing to move. When the damping control core 112 rotates towards another direction relative to the housing 111 until the limiting surface 233 of the other wing portion 232 reaches the corresponding extreme position 201, the limiting surface 233 is stopped by the other side of the partition portion 213 to prevent the damping control core 112 from continuing to move.

The radially inner side surfaces of the partition portions 213 are arc surfaces and are in slidable contact with an outer peripheral surface of the mandrel 231, or the radially inner side surfaces of the partition portions 213 are arc surfaces parallel to the outer peripheral surface of the mandrel 231, and have small gaps with the outer peripheral surface of the mandrel 231.

As an optional configuration, raised portions 214 symmetrical with the partition portions 213 are also disposed in the housing 111, so that the effect of centering or auxiliary centering can be achieved on the damping control core 112 through the partition portions 213 and the raised portions 214.

The partition portions 213 and the raised portions 214 extend from one side to the other side in the axial direction of the chamber 240 and partition the chamber 240 into two parts in which two wing portions 232 are located respectively. The damping control core 112 extends from one side to the other side in the axial direction of the chamber 240, and the wing portions 232 partition the chamber 240 to form proximal accommodating cavities 241 close to the extreme positions 201 and distal accommodating cavities 242 away from the extreme positions 201.

Inner connection channels 250 that connect the proximal accommodating cavities 241 and the distal accommodating cavities 242 are formed in the wing portions 232, and outer connection channels 270 that connect the proximal accommodating cavities 241 and the distal accommodating cavities 242 are formed between the wing portions 232 and the inner wall 211 of the housing 111. The inner connection channels 250 and the outer connection channels 270 can be controllably connected to the proximal accommodating cavities 241 and the distal accommodating cavities 242, as detailed below.

The volumes of each proximal accommodating cavity 241 and the corresponding distal accommodating cavity 242 change oppositely along with the movement of the damping control core 112 relative to the housing 111, that is, the volume of one of each proximal accommodating cavity 241 and the corresponding distal accommodating cavity 242 increases, and the volume of the other one decreases; and the damping liquid flows from the chamber with decreased volume to the chamber with increased volume via the inner connection channels 250 and/or the outer connection channels 270.

The housing 111 is also provided with two flow-limiting bosses 212 adjacent to two extreme positions 201 respectively. The flow-limiting bosses 212 project out of the inner wall 211 of the housing 111 to a radially inner side, extend from one side to the other side in the axial direction of the chamber 240, and extend along the circumferential direction from the partition portions 213 towards the corresponding wing portions 232 by a control distance D₀, and the control distance D₀ is an angular distance. When the damping control core 112 rotates relative to the housing 111 until an angular distance D between one limiting surface 233 and the corresponding extreme position 201 is the control distance D₀, the limiting surface 233 reaches a control position.

The radially inner side surfaces of the flow-limiting bosses 212 are arc surfaces that take an axis X of the mandrel 231 as a center line; when the limiting surface 233 of one wing portion 232 is located between the corresponding control position and the extreme position 201, the radially inner side surface of the corresponding flow-limiting boss 212 is parallel to the radially outer side surface of the wing portion 232 and separated by a small gap, thereby decreasing the communication area of the corresponding outer connection channel 270 to decrease the flow rate of the corresponding outer connection channel 270. Alternatively, when the limiting surface 233 of one wing portion 232 is located between the corresponding control position and the extreme position 201, the radially inner side surface of the corresponding flow-limiting boss 212 is in slidable contact with the radially outer side surface of the wing portion 232, thereby decreasing the communication area of the corresponding outer connection channel 270 to 0 or nearly 0, so that the corresponding outer connection channel 270 is closed or nearly closed.

In another embodiment not shown, the flow-limiting bosses 212 extend along the circumferential direction and are separated from the corresponding extreme position 201 by a certain distance. The flow-limiting bosses 212 comprise proximal surfaces close to the corresponding extreme positions 201 and distal surfaces away from the corresponding extreme positions 201, and the proximal surfaces and the distal surfaces are located on both sides of the flow-limiting bosses 212 in the circumferential direction respectively. Wherein a distance from the proximal surface to the corresponding extreme position 201 is not greater than a circumferential length of a radially outer side surface of the wing portions 232, and a distance from the distal surface to the corresponding extreme position 201 is the control distance D₀.

Continuing to refer to FIGs. 2A-2E, each inner connection channel 250 comprises a proximal channel 251, a middle channel 253, and a distal channel 252 connected sequentially. One end of the proximal channel 251 is adjacent to the proximal accommodating cavity 241 and is in fluid connection with the proximal accommodating cavity 241, and the other end of the proximal channel 251 is connected to the middle channel 253. One end of the distal channel 252 is adjacent to the distal accommodating cavity 242 and is in fluid connection with the distal accommodating cavity 242, and the other end of the distal channel 252 is connected to the middle channel 253. The middle channel 253 is movably provided with a channel control core 260.

The middle channels 253 and the channel control cores 260 extend generally along an axial direction, i.e., the direction of the axis X of the mandrel 231. The channel control cores 260 are cylindrical over at least a portion of the length, radial sections of the middle channels 253 are oblong holes, and the oblong holes extend generally along the circumferential direction, thereby making the channel control cores 260 easy to move within the middle channels 253. The middle channel 253 comprises two opposing ends in the circumferential direction, i.e., a proximal end 2531 close to the proximal channel 251 and a distal end 2532 close to the distal channel 252 respectively.

Shapes of the inner connection channels 250 are configured such that communication areas of the inner connection channels 250 can be increased or decreased by adjusting positions of the channel control cores 260 in the inner connection channels 250. The proximal channel 251 and the distal channel 252 generally extend along the circumferential direction, so that when the damping control core 112 rotates relative to the housing 111, the damping liquid flowing into the inner connection channel 250 pushes the channel control core 260 to move, thereby automatically controlling the flow rate in the inner connection channel 250, as detailed below.

The distal channel 252 is a circular hole and is connected to the distal end 2532 of the middle channel 253. The diameter of the distal channel 252 is the same as or similar to the diameter of a cylindrical portion of the channel control core 260. Referring to FIG. 2C, when the channel control core 260 moves to the distal end 2532 of the middle channel 253, the channel control core 260 can block the entire or most of an interface between the distal channel 252 and the middle channel 253. At this time, the communication area S₂ of the inner connection channel 250 is 0 or nearly 0, and the inner connection channel 250 is closed or only a small amount of damping liquid is allowed to pass through the inner connection channel 250.

The proximal channel 251 is a circular hole, the diameter of the proximal channel 251 is larger than the diameter of the cylindrical portion of the channel control core 260, and the proximal channel 251 intersects the proximal end 2531 of the middle channel 253, and extends to a middle portion of the middle channel 253 located between the proximal end 2531 and the distal end 2532. Referring to FIG. 2D, when the channel control core 260 moves to the proximal end 2531 of the middle channel 253, the channel control core 260 can only block a small part of the interface between the proximal channel 251 and the middle channel 253. At this time, the communication area S₁ of the inner connection channel 250 is much larger than 0 and larger than S₂, thereby allowing more damping liquid to pass through the inner connection channel 250.

It can be understood that in some other embodiments not shown, the inner connection channel 250 may be configured in other shapes. For example, in an embodiment, the proximal channel 251 extends generally along a direction at an acute angle to the circumferential direction and is connected to the middle portion of the middle channel 253. The diameter of the proximal channel 251 may be greater than, less than, or equal to the diameter of the cylindrical portion of the channel control core 260, or the proximal channel 251 may be a non-circular hole. When the channel control core 260 moves to the proximal end 2531 of the middle channel 253, the channel control core 260 cannot block the interface between the proximal channel 251 and the middle channel 253 or can only block a small part of this interface, thereby allowing more damping liquid to pass through the inner connection channel 250.

In another embodiment, the proximal channel 251 and the middle channel 253 extend generally along the circumferential direction, but only partially overlap in the radial direction. That is, a portion of the proximal channel 251 overlaps with a portion of the middle channel 253, and the other portion of the proximal channel 251 is located on the radially inner side or radially outer side of the middle channel 253. The diameter of the proximal channel 251 may be greater than, less than, or equal to the diameter of the cylindrical portion of the channel control core 260, or the proximal channel 251 may be a non-circular hole. When the channel control core 260 moves to the proximal end 2531 of the middle channel 253, the channel control core 260 cannot block the portion of the proximal channel 251 located on the radially inner side or radially outer side of the middle channel 253, thereby allowing more damping liquid to pass through the inner connection channel 250.

In yet another embodiment, the distal channel 252 is configured to extend generally along a direction at an acute angle to the circumferential direction. The distal channel 252 can be a circular hole or a non-circular hole, as long as the channel control core 260 can either close the inner connection channel 250 or only allow a small amount of damping liquid to pass through the inner connection channel 250 when the channel control core 260 moves to the distal end 2532 of the middle channel 253.

Continuing to refer to FIGs. 2A-2E, the inner connection channel 250 comprises a plurality of proximal channels 251 arranged at intervals generally along the axial direction, and a plurality of distal channels 252 arranged at intervals generally along the axial direction, so that the channel control core 260 experiences a more uniform axial force, thereby making the movement of the channel control core 260 smoother and more accurate, and being able to guarantee the flow rate requirements of the inner connection channel 250 in high flow rate states, while minimizing the impact on the strength of the damping control core 112.

In another embodiment not shown, the inner connection channel 250 comprises a plurality of middle channels 253 arranged at intervals along the axial direction and a plurality of channel control cores 260. Each middle channel 253 is connected to one proximal channel 251 and one distal channel 252, and is internally provided with one channel control core 260.

The working principle of the damping device 110 of the embodiment shown in FIGs. 2A-2E will be described below with reference to FIGs. 2B-2D by taking an example where the housing 111 is stationary and the damping control core 112 rotates. It can be understood that in some other embodiments, the damping device 110 may be configured such that the housing 111 rotates while the damping control core 112 is stationary, or configured such that the housing 111 and the damping control core 112 rotate at different speeds and/or in different directions respectively. The end cover 220 may be configured to be fixedly connected or rotatably connected with the housing 111.

Referring to FIG. 2B, in a first state, neither of the two limiting surfaces 233 is between the corresponding control position and the extreme position 201. Compared with the states shown in FIG. 2C and FIG. 2D, a gap between the wing portion 232 and the inner wall 211 of the housing 111 is larger, and the communication area of the outer connection channel 270 is increased. When the damping control core 112 rotates relative to the housing 111, the damping liquid may flow quickly via the outer connection channel 270 from the chamber with a decreased volume to the chamber with an increased volume in the proximal accommodating cavity 241 and the distal accommodating cavity 242, so that the damping device 110 provides small damping.

Referring to FIG. 2C, in a second state, the limiting surface 233 of one wing portion 232, such as the wing portion 232 at a lower left corner, moves towards the extreme position 201 between the corresponding control position and the extreme position 201; the volume of the proximal accommodating cavity 241 located between the wing portion 232 and the corresponding extreme position 201 decreases accordingly; the volume of the distal accommodating cavity 242 located on the other side of the wing portion 232 increases accordingly; and a small gap or sliding fit is formed between the radially inner side surface of the corresponding flow-limiting boss 212 and the radially outer side surface of the wing portion 232. Thus, compared with the state shown in FIG. 2B, the communication area of the corresponding outer connection channel 270 is decreased, thereby limiting the flow of the damping liquid via the outer connection channel 270.

The damping liquid in the proximal accommodating cavity 241 between the wing portion 232 and the corresponding extreme position 201 flows into the inner connection channel 250 in the wing portion 232, and pushes the channel control core 260 to the distal end 2532 of the middle channel 253, so that the communication area of the inner connection channel 250 is decreased, thereby limiting the flow of the damping liquid via the inner connection channel 250 from the proximal accommodating cavity 241 with a decreased volume to the distal accommodating cavity 242 with an increased volume, that is, limiting the volume change speed of the proximal accommodating cavity 241 and the distal accommodating cavity 242, so as to limit the rotation speed of the damping control core 112 relative to the housing 111, so that the damping device 110 provides large damping. Wherein at least one of the outer connection channel 270 and the inner connection channel 250 is not completely closed, and/or a small gap is present between the partition portion 213 and the outer peripheral surface of the mandrel 231, so as to prevent the damping control core 112 from becoming stuck and ensure that the limiting surface 233 of the wing portion 232 can slowly reach the corresponding extreme position 201.

Referring to FIG. 2D, in a third state, the limiting surface 233 of one wing portion 232, such as the wing portion 232 at a lower left corner, moves away from the extreme position 201 between the corresponding control position and the extreme position 201; the volume of the proximal accommodating cavity 241 located between the wing portion 232 and the corresponding extreme position 201 increases accordingly; the volume of the distal accommodating cavity 242 located on the other side of the wing portion 232 decreases accordingly; and a small gap or sliding fit is formed between the radially inner side surface of the corresponding flow-limiting boss 212 and the radially outer side surface of the wing portion 232. Thus, compared with the state shown in FIG. 2B, the communication area of the corresponding outer connection channel 270 is decreased, thereby limiting the flow of the damping liquid via the outer connection channel 270.

The damping liquid in the distal accommodating cavity 242 on the other side of the wing portion 232 flows into the inner connection channel 250 in the wing portion 232, and pushes the channel control core 260 to the proximal end 2531 of the middle channel 253, so that the communication area of the inner connection channel 250 is increased, and the damping liquid may flow quickly via the inner connection channel 250 from the distal accommodating cavity 242 with a decreased volume to the proximal accommodating cavity 241 with an increased volume, so that the damping device 110 provides small damping.

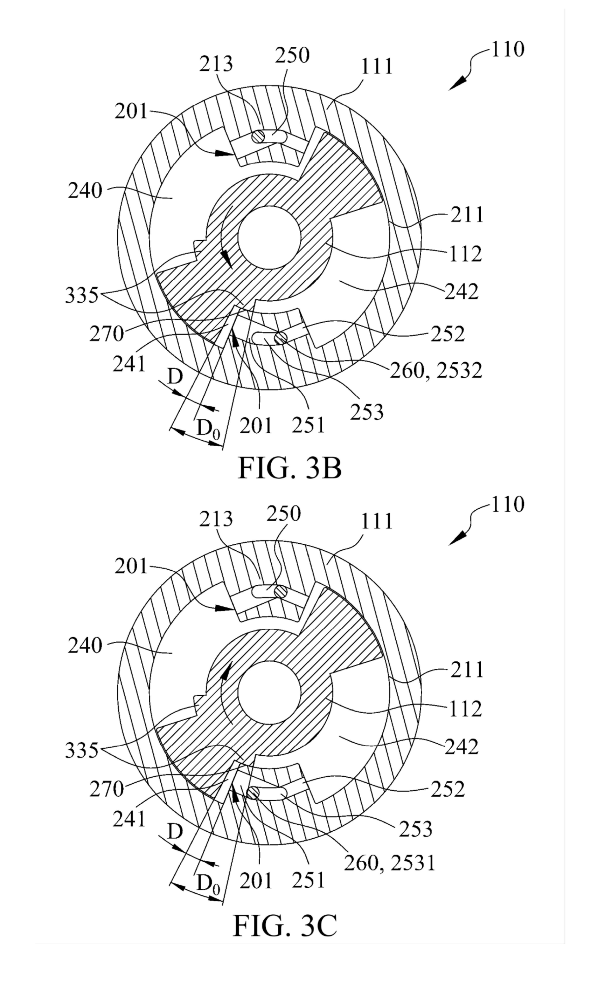

The specific structure and the working principle of the damping device 110 according to another embodiment of the present disclosure are described below with reference to FIGs. 3A-3C, wherein FIG. 3A is a radial sectional view of the damping device 110 in the first state, FIG. 3B is a radial sectional view of the damping device 110 in the second state, and FIG. 3C is a radial sectional view of the damping device 110 in the third state. The present embodiment follows the element numbers and part of the content of the aforementioned embodiments, wherein the same numbers are used to represent the same or similar elements, and the description of the same technical content is selectively omitted. For the description of the omitted part, reference may be made to the aforementioned embodiments and the present embodiment will not repeat it.

In the embodiment shown in FIGs. 3A-3C, the housing 111 comprises two partition portions 213, and the two partition portions 213 define two extreme positions 201 respectively. The damping control core 112 comprises a generally cylindrical mandrel 231 and two wing portions 232 extending from the mandrel 231 to a radially outer side. Two limiting surfaces 233 are provided respectively on two opposing sides of one wing portion 232 in the circumferential direction. The two limiting surfaces 233 face two extreme positions 201 respectively and can be stopped by the corresponding partition portions 213 respectively.

The radially outer side surface of each wing portion 232 is an arc surface parallel to the inner wall 211 of the housing 111, and has a small gap from the inner wall 211 of the housing 111, or the radially outer side surface of each wing portion 232 is in slidable contact with the inner wall 211 of the housing 111, thereby achieving the effect of centering or auxiliary centering on the damping control core 112.

The damping control core 112 extends from one axial side to the other side of the chamber 240 and partitions the chamber 240 into two parts, and two partition portions 213 are located in the two parts respectively. The partition portions 213 extend from one axial side to the other side of the chamber 240, and partition the chamber 240 to form proximal accommodating cavities 241 close to the extreme positions 201 and distal accommodating cavities 242 away from the extreme positions 201.

Inner connection channels 250 that connect the proximal accommodating cavities 241 and the distal accommodating cavities 242 are formed in the partition portions 213, and outer connection channels 270 that connect the proximal accommodating cavities 241 and the distal accommodating cavities 242 are formed between the partition portions 213 and the damping control core 112.

The damping control core 112 is provided with two flow-limiting bumps 335 adjacent to two limiting surfaces 233 respectively. The flow-limiting bumps 335 project out of an outer surface of the damping control core 112 to an outer side, extend from one axial side to the other side of the chamber 240, and extend along a circumferential direction from the wing portions 232 towards the corresponding partition portions 213 by a control distance D₀, and the control distance D₀ is an angular distance. When the damping control core 112 rotates relative to the housing 111 until an angular distance D between one limiting surface 233 and the corresponding extreme position 201 is the control distance D₀, the limiting surface 233 reaches a control position.

The radially outer side surface of the flow-limiting bump 335 and the radially inner side surface of the partition portion 213 are arc surfaces that take the axis of the mandrel 231 as a center line respectively. When one limiting surface 233 is located between the corresponding control position and the extreme position 201, the radially outer side surface of the corresponding flow-limiting bump 335 is parallel to the radially inner side surface of the corresponding partition portion 213 and separated by a small gap, thereby decreasing the communication area of the corresponding outer connection channel 270 to decrease the flow rate of the corresponding outer connection channel 270. Alternatively, when one limiting surface 233 is located between the corresponding control position and the extreme position 201, the radially outer side surface of the corresponding flow-limiting bump 335 is in slidable contact with the radially inner side surface of the corresponding partition portion 213, thereby decreasing the communication area of the corresponding outer connection channel 270 to 0 or almost 0, so that the corresponding outer connection channel 270 is closed or almost closed.

In another embodiment not shown, the flow-limiting bump 335 extends along the circumferential direction and is separated from the corresponding limiting surface 233 by a certain distance. The flow-limiting bump 335 comprises a proximal surface close to the corresponding wing portion 232 and a distal surface away from the corresponding wing portion 232, and the proximal surface and the distal surface are located on both circumferential sides of the flow-limiting bump 335 respectively. Wherein a distance from the proximal surface to the corresponding limiting surface 233 is not greater than a circumferential length of the radially inner side surface of the partition portion 213, and a distance from the distal surface to the corresponding limiting surface 233 is the control distance D₀.

The working principle of the damping device 110 in the embodiment shown in FIGs. 3A-3C will be described below.

Referring to FIG. 3A, in a first state, neither of the two limiting surfaces 233 is between the corresponding control position and the extreme position 201. Compared with the states shown in FIG. 3B and FIG. 3C, a gap between the partition portion 213 and the damping control core 112 is larger, and the communication area of the outer connection channel 270 is increased. When the damping control core 112 rotates relative to the housing 111, the damping liquid may flow quickly via the outer connection channel 270 from the chamber with a decreased volume to the chamber with an increased volume in the proximal accommodating cavity 241 and the distal accommodating cavity 242, so that the damping device 110 provides small damping.

Referring to FIG. 3B, in a second state, one limiting surface 233, such as a right limiting surface 233 of the wing portion 232 at a lower left corner, moves towards the extreme position 201 between the corresponding control position and the extreme position 201; the volume of the proximal accommodating cavity 241 located between the limiting surface 233 and the corresponding partition portion 213 decreases accordingly; the volume of the distal accommodating cavity 242 located on the other side of the partition portion 213 increases accordingly; and a small gap or sliding fit is formed between the radially outer side surface of the corresponding flow-limiting bump 335 and the radially inner side surface of the corresponding partition portion 213. Thus, compared with the state shown in FIG. 3A, the communication area of the corresponding outer connection channel 270 is decreased, thereby limiting the flow of the damping liquid via the outer connection channel 270.

The damping liquid in the proximal accommodating cavity 241 between the limiting surface 233 and the corresponding partition portion 213 flows into the inner connection channel 250 in the partition portion 213, and pushes the channel control core 260 to the distal end 2532 of the middle channel 253, so that the communication area of the inner connection channel 250 is decreased, thereby limiting the flow of the damping liquid via the inner connection channel 250 from the proximal accommodating cavity 241 with a decreased volume to the distal accommodating cavity 242 with an increased volume, that is, limiting the volume change speed of the proximal accommodating cavity 241 and the distal accommodating cavity 242, so as to limit the speed of rotation of the damping control core 112 relative to the housing 111, so that the damping device 110 provides large damping. Wherein at least one of the outer connection channel 270 and the inner connection channel 250 is not completely closed, and/or a small gap is present between the radially outer side surface of the wing portion 232 and the inner wall 211 of the housing 111, so as to prevent the damping control core 112 from becoming stuck and ensure that the limiting surface 233 can slowly reach the corresponding extreme position 201.

Referring to FIG. 3C, in a third state, one limiting surface 233, such as a right limiting surface 233 of the wing portion 232 at a lower left corner, moves away from the extreme position 201 between the corresponding control position and the extreme position 201; the volume of the proximal accommodating cavity 241 located between the limiting surface 233 and the corresponding partition portion 213 increases accordingly; the volume of the distal accommodating cavity 242 located on the other side of the partition portion 213 decreases accordingly; and a small gap or sliding fit is formed between the radially outer side surface of the corresponding flow-limiting bump 335 and the radially inner side surface of the corresponding partition portion 213. Thus, compared with the state shown in FIG. 3A, the communication area of the corresponding outer connection channel 270 is decreased, thereby limiting the flow of the damping liquid via the outer connection channel 270.

The damping liquid in the distal accommodating cavity 242 on the other side of the partition portion 213 flows into the inner connection channel 250 in the partition portion 213, and pushes the channel control core 260 to the proximal end 2531 of the middle channel 253, so that the communication area of the inner connection channel 250 is increased, so that the damping liquid may flow quickly via the inner connection channel 250 from the distal accommodating cavity 242 with a decreased volume to the proximal accommodating cavity 241 with an increased volume, so that the damping device 110 provides small damping.

Referring to FIG. 1, the valve 100 further comprises a connecting rod 150 fixedly connected to the valve body 120. The connecting rod 150 penetrates through the damping control core 112 and is fixedly connected to the damping control core 112, thereby fixedly connecting the valve body 120 with the damping control core 112 of the damping device 110. An end of the arm 140 connected to the valve body 120 provides the housing 111 of the damping device 110, thereby fixedly connecting the valve core 130 with the housing 111 of the damping device 110.

Thus, when the valve core 130 rotates relative to the valve body 120, the damping device 110 controls the changing speed of the volumes of the proximal accommodating cavity 241 and the distal accommodating cavity 242 by controlling the flow rate of the inner connection channel 250 and/or the outer connection channel 270 to adjust the speed of movement of the housing 111 and the damping control core 112 relative to each other, that is, the speed of rotation of the valve core 130 relative to the valve body 120. The two extreme positions 201 of the damping device 110 correspond to a closed position and a maximum opening position of the valve core 130 respectively.

When the valve core 130 moves near the closed position towards the closed position, or when the valve core 130 moves near the maximum opening position towards the maximum opening position, the state of the damping device 110 is equivalent to the aforementioned second state. At this time, the damping device 110 provides large damping, so that the valve core 130 slowly reaches a fully closed position or the maximum opening position, so as to prevent the valve core 130 from colliding with the valve seat sealing surface 121 or the maximum opening limit.

At the moment when the valve core 130 opens a valve from the fully closed position or reversely closes the valve from the maximum opening position, the state of the damping device 110 is equivalent to the aforementioned third state. At this time, the damping device 110 provides small damping, thereby ensuring that the opening and closing responses of the valve core 130 are sensitive.

When the valve core 130 is not near the fully closed position and is not near the maximum opening position, the state of the damping device 110 is equivalent to the aforementioned first state. At this time, the damping device 110 provides small damping, thereby ensuring a sensitive response of the valve core 130.

The valve 100 according to the embodiments of the present disclosure can avoid frequent collision between the valve core 130 and the valve seat sealing surface 121 and/or the maximum opening limit while ensuring the sensitive response of the valve. This can reduce or avoid abnormal noise caused by mechanical collision and extend the service life of the valve.

The damping device 110 according to the embodiments of the present disclosure can provide damping that meets the needs in different states according to the relative positions and relative movement directions of the housing 111 and the damping control core 112. The damping device 110 has a simple structure, is easy to operate, and can be used not only for check valves, but also for other types of valves, or for other relatively rotating components.

It is worth noting that although in the embodiment shown in FIG. 1, the valve body 120 is fixedly connected to the damping control core 112 of the damping device 110, and the valve core 130 is fixedly connected to the housing 111 of the damping device 110, in other embodiments, the valve body 120 can also be fixedly connected to the housing 111 of the damping device 110 and the valve core 130 is fixedly connected to the damping control core 112 of the damping device 110. In addition, although in the above embodiments, the damping device 110 is provided with two extreme positions 201, in some other embodiments, according to the needs of practical applications, the damping device can also be provided with only one extreme position, and the number of the limiting surfaces, the wing portions, the inner connection channels, the outer connection channels, etc. can be adjusted accordingly.

Although the present disclosure has been described in conjunction with the examples of embodiments outlined above, various alternatives, modifications, variations, improvements and/or substantial equivalents, whether known or foreseeable now or soon, may become apparent to those of ordinary skill in the art. In addition, the technical effects and/or technical problems described in the specification are exemplary rather than restrictive. Therefore, the disclosure in the specification may be used for solving other technical problems and have other technical effects and/or can solve other technical problems. Accordingly, the examples of embodiments of the present disclosure set forth above are intended to be illustrative rather than restrictive. Various changes may be made without departing from the spirit or scope of the present disclosure. Accordingly, the present disclosure is intended to embrace all known or earlier developed alternatives, modifications, variations, improvements and/or substantial equivalents.

## Claims

1. A damping device (110), comprising:
a housing (111), wherein the housing (111) defines a chamber (240) that is generally cylindrical, the chamber (240) is filled with a damping liquid, and the housing (111) comprises partition portions (213) that project out of an inner wall (211) of the housing (111) to define extreme positions (201);
a damping control core (112), wherein the damping control core (112) is disposed in the chamber (240) and can rotate relative to the housing (111), the damping control core (112) is provided with wing portions (232), and the wing portions (232) are provided with limiting surfaces (233) that face the extreme positions (201) and that are capable of being stopped by the partition portions (213), wherein when a distance (D) between the limiting surfaces (233) and the extreme positions (201) is a control distance (D₀), the limiting surfaces (233) reach a control position;
wherein the chamber (240) comprises proximal accommodating cavities (241) close to the extreme positions (201) and distal accommodating cavities (242) away from the extreme positions (201), the proximal accommodating cavities (241) and the distal accommodating cavities (242) are formed by partitioning by the partition portions (213) or the wing portions (232), and the volumes of each proximal accommodating cavity (241) and the corresponding distal accommodating cavity (242) change oppositely along with the movement of the damping control core (112) relative to the housing (111);
wherein inner connection channels (250) are formed in the wing portions (232), and outer connection channels (270) are formed between the wing portions (232) and the inner wall (211), or the inner connection channels (250) are formed in the partition portions (213), and the outer connection channels (270) are formed between the partition portions (213) and the damping control core (112); and wherein the inner connection channels (250) and the outer connection channels (270) can be controllably connected to the proximal accommodating cavities (241) and the distal accommodating cavities (242);
wherein the damping device (110) is configured such that:
when the limiting surfaces (233) are not between the control position and the extreme positions (201), communication areas of the outer connection channels (270) are increased so that the damping device (110) provides small damping;
when the limiting surfaces (233) move towards the extreme positions (201) between the control position and the extreme positions (201), communication areas of the outer connection channels (270) and of the inner connection channels (250) are decreased so that the damping device (110) provides large damping; and
when the limiting surfaces (233) move away from the extreme positions (201) between the control position and the extreme positions (201), communication areas of the outer connection channels (270) are decreased, and communication areas of the inner connection channels (250) are increased so that the damping device (110) provides small damping.

2. The damping device (110) according to claim 1, further comprising:
flow-limiting bosses (212), wherein the flow-limiting bosses (212) project out of the inner wall (211) of the housing (111) and extend along a circumferential direction, the flow-limiting bosses (212) extend from the partition portions (213) towards the wing portions (232) by the control distance (D₀), or the flow-limiting bosses (212) comprise proximal surfaces close to the extreme positions (201) and distal surfaces away from the extreme positions (201), wherein a distance from the proximal surfaces to the extreme positions (201) is not greater than a circumferential length of a radially outer side surface of the wing portions (232), and a distance from the distal surfaces to the extreme positions (201) is the control distance (D₀); and
wherein communication areas of the outer connection channels (270) can be decreased by the flow-limiting bosses (212).

3. The damping device (110) according to claim 2, wherein
the damping control core (112) comprises a mandrel (231) and two wing portions (232) extending from the mandrel (231) to a radially outer side, two opposing sides of the partition portions (213) define two extreme positions (201) respectively, and the housing (111) is provided with two flow-limiting bosses (212) adjacent to the two extreme positions (201) respectively.

4. The damping device (110) according to claim 1, further comprising:
flow-limiting bumps (335), wherein the flow-limiting bumps (335) project out of an outer surface of the damping control core (112) and extend along a circumferential direction, the flow-limiting bumps (335) extend from the wing portions (232) towards the partition portions (213) by the control distance (D₀), or the flow-limiting bumps (335) comprise proximal surfaces close to the wing portions (232) and distal surfaces away from the wing portions (232), wherein a distance from the proximal surfaces to the limiting surfaces (233) is not greater than a circumferential length of a radially inner side surface of the partition portions (213), and a distance from the distal surfaces to the limiting surfaces (233) is the control distance (D₀); and
wherein communication areas of the outer connection channels (270) can be decreased by the flow-limiting bumps (335).

5. The damping device (110) according to claim 4, wherein
the damping control core (112) comprises a mandrel (231) and at least one wing portion (232) extending from the mandrel (231) to a radially outer side; two opposing sides of one wing portion (232) of the at least one wing portion (232) provide two limiting surfaces (233) respectively; the damping control core (112) is provided with two flow-limiting bumps (335) adjacent to the two limiting surfaces (233) respectively; the housing (111) comprises two partition portions (213); and the two partition portions (213) define two extreme positions (201) respectively.

6. The damping device (110) according to any one of claims 1-5, further comprising:
channel control cores (260), wherein the channel control cores (260) are movably disposed in the inner connection channels (250);
wherein shapes of the inner connection channels (250) are configured such that communication areas of the inner connection channels (250) can be increased or decreased by adjusting positions of the channel control cores (260) in the inner connection channels (250).

7. The damping device (110) according to claim 6, wherein
the inner connection channels (250) comprise proximal channels (251), middle channels (253), and distal channels (252) connected sequentially, the proximal channels (251) are adjacent to the proximal accommodating cavities (241) and are in fluid connection with the proximal accommodating cavities (241), the distal channels (252) are adjacent to the distal accommodating cavities (242) and are in fluid connection with the distal accommodating cavities (242), and the channel control cores (260) are movably disposed in the middle channels (253).

8. The damping device (110) according to claim 7, wherein
the middle channels (253) and the channel control cores (260) extend generally along an axial direction, and the proximal channels (251) and the distal channels (252) extend generally along a circumferential direction or extend generally along a direction at an acute angle to the circumferential direction;
wherein when the channel control core (260) moves to an end (2531) of the middle channel (253) close to the proximal channel (251), the communication area of the inner connection channel (250) is S₁; and when the channel control core (260) moves to an end (2532) of the middle channel (253) close to the distal channel (252), the communication area of the inner connection channel (250) is S₂, wherein S₁ is greater than S₂.

9. The damping device (110) according to claim 8, wherein
the channel control cores (260) are cylindrical over at least a portion of the length, radial sections of the middle channels (253) are oblong holes, and the oblong holes extend generally along the circumferential direction.

10. The damping device (110) according to claim 8, wherein
the inner connection channel (250) comprises a plurality of proximal channels (251), and the plurality of proximal channels (251) are arranged at intervals generally along the axial direction; and/or
the inner connection channel (250) comprises a plurality of distal channels (252), and the plurality of distal channels (252) are arranged at intervals generally along the axial direction.

11. The damping device (110) according to any one of claims 1-5, wherein decreasing communication areas of the outer connection channels (270) comprises closing the outer connection channels (270), and decreasing communication areas of the inner connection channels (250) comprises closing the inner connection channels (250).

12. A valve (100), comprising a valve body (120), a valve core (130) and the damping device (110) according to any one of claims 1-11, wherein one of the valve body (120) and the valve core (130) is fixedly connected to the housing (111) of the damping device (110), and the other of the valve body (120) and the valve core (130) is fixedly connected to the damping control core (112) of the damping device (110).
